# EUROPEAN PATENT APPLICATION

(11) **EP 2 551 511 A1**
(43) Date of publication of application: **30.01.2013**
(21) Application number: 11006104.1
(22) Date of filing: 25.07.2011
(51) Int. Cl.: F03D 1/06, E04F 13/08, B32B 3/16, B63B 5/06, B29C 63/00, B27M 3/00

(54) **Method for producing flexible end grain balsa panels**

(71) Applicant: 3A Composites Plantaciones de Balsa Pantabal S.A., Guayaquil (EC)
(72) Inventor: Gattiker, Christian, 8330 Pfäffikon (CH); Fausto, Bueno, Guayaquil 5934 (EC); Andrade, Allison, Mz. 925 V6, Guayaquil, Guayas (EC); Junghanns, Sascha Matthias, 73230 Kirchheimteck (DE)
(74) Representative: Gernet, Samuel Andreas

(57) **Abstract**

A method for producing flexible end grain balsa panels in an example of an embodiment comprises the steps of
A. arranging a plurality of lumber sticks (10) of rectangular cross-section having all the same length (lₛ), width (wₛ) and thickness (tₛ) parallel to each other thereby forming a block (14) of rectangular cross-section;
B. pressing a layer of scrim (26), comprising a binding agent, against end faces (24) of the lumber sticks (10) forming the block (14);
C. maintaining pressure and applying heat to the layer of agent scrim (26) to laminate the scrim (26) to the end faces (24) of the lumber sticks (10);
D. cutting a panel (40) consisting of end sections (12) of the lumber sticks (10) laminated with the scrim (26) from the block (14).

## Description

The present invention relates to methods for producing flexible end grain balsa panels.

This invention relates generally to techniques for converting round logs into flexible panels. Traditionally this process consists of cutting logs into pieces, drying the pieces and cleaning the surfaces of them. After that, the lumber pieces are glued together to a block from which solid panels are cut. For flexible panels, afterwards, one side of the panel is equipped with a scrim that allows vertically and horizontally cutting of the panel. This leads to defined single pieces on a scrim.

End-grain balsa-cored sandwich laminates are widely used for blades of wind turbines, in transportation and handling equipment, such as for floors of railroad cars, shipping containers, cargo pallets, bulkheads, doors, reefer bodies, as well as in a wide variety of other applications. These laminates are also employed for structural insulation in aircraft applications, housing and in boating.

It is an object of the present invention to provide methods for the cost efficient production of flexible panels without traditional block glueing.

The foregoing object is achieved according to the invention by a method comprising the steps of
A. arranging a plurality of lumber sticks having all the same length, width and thickness parallel to each other thereby forming a block of rectangular cross-section;
B. bringing in contact a layer of scrim, impregnated or coated with a binding agent, and the end faces of the block formed by the lumber sticks;
C. applying pressure, heat and/or radiation to the layer of scrim to laminate the scrim to the end faces of the lumber sticks.

In a preferred embodiment, the method for producing flexible end grain balsa panels, said method comprises the steps of
A. arranging a plurality of lumber sticks of rectangular cross-section having all the same length, width and thickness parallel to each other thereby forming a block of rectangular cross-section;
B. pressing a layer of scrim, impregnated or coated with a binding agent, against end faces of the lumber sticks forming the block;
C. maintaining pressure and applying heat to the layer of agent scrim to laminate the scrim to the end faces of the lumber sticks;
D. cutting a panel consisting of end sections of the lumber sticks laminated with the scrim from the block.

The layer of scrim is preferably provided by a roll, coil or reel.

The cutting device is preferably a band saw.

Pressing scrim against end faces of the lumber sticks can be performed preferably by pressing or pressing and heating by a heatable plunger plate.

The lumber sticks are preferably held in a frame.

Pressing means are preferably arranged laterally of the block. The block is subjected to compression in orthogonal directions by a pressing system. A preferred embodiment of a pressing system consists of a first pressing device holding together the lumber sticks with a pressure eliminating natural torn, bends and twists appearing in the single lumber sticks and a second pressure device applying high pressure to remove remaining voids, gaps, seams or slits between opposite contacting surfaces of the single lumber sticks. No adhesive is provided between the single lumber sticks and the block is hold together by external pressure only. As a rule, the first pressing system is arranged on the block at the end away from the cutting end. The second pressure device is arranged relative to the block near the end where the panels are cut from.

The object of the invention is also achieved by another preferred method comprising the steps of
A. arranging a plurality of lumber sticks of rectangular cross-section having all the same length, width and thickness parallel to each other in a block having single lines of lumber sticks of rectangular cross-section;
B. cutting rows of end sections from the block of single lines of lumber sticks;
C. piling up the rows of end sections on at least one band-conveyor transverse to a transfer direction thereby forming an endless package of piled up rows of end sections;
D. continuously placing a layer of scrim, impregnated or coated with a binding agent, on end faces of the piled up end sections;
E. pressing the layer of scrim against the end faces of the piled up end sections forming the endless package of piled up rows of end sections;
F. maintaining pressure and applying heat and/or radiation to the layer of binding agent scrim to laminate the scrim to the end faces of the piled up end sections thereby forming an endless panel;
G. cutting end grain balsa units from the endless panel laminated with scrim.

The end grain balsa units or panels according to the instant invention may have a height of 5 to 50 mm. The width of such panels or units depends on the manufacturing devices and may vary, for example from 50 mm or less to 1000 mm and above. Practically panels or units have a width of 400 to 700 mm. A typical length for a panel or unit ranges from 400 to 1500 mm, with a preferred range from 500 to 1300 mm.

The scrim can consist of for example woven material, woven fabric, stitch bonded or knitted fabrics, a felt or veil. Preferred are woven materials or fabrics. The materials of such fabrics include the preferred glass fibers, further plastic fibers, like polyamide fibers, Aramide-fibers or carbon fibers. Fibers showing non wetting or non absorbing properties are preferred to keep the amount of binding agent on a minimum. Glass fiber fabrics are most preferred.

The scrim comprises a binding agent. Binding agents to adhere the scrim at the end faces may be selected from the group of adhesives or glues, like water-based adhesives, solvent-based adhesives, glutin-, starch-, dextrin- or casein-based glues, urethane-based adhesives, epoxy-based adhesives, hot-melts, vinyl acetate-ethylene adhesives, mainly waterborne vinyl acetate-ethylene adhesives, etc. The adhesives or glues may harden by drying, by heat or by radiation, like UV-light. As far as radiation is disclosed, UV-radiation is preferred.

It is possible to impregnate, layering, laminating or to coat the scrim with the binding agent and to activate the binding process for example by heat or radiation, like UV-radiation. The binding agents are activated at the point where the scrim is in touch with the end faces of the lumber sticks. In an alternative embodiment, the scrim is continuously layered, laminated, coated or impregnated with the binding agent after unwinding the scrim from the coil and before getting in touch with the end faces of the lumber sticks. If such later process is applied, depending on the nature of the binding agent, the binding agent is applied and pre-cured on the scrim. The impregnated or coated and pre-cured scrim is applied on the end faces and in following curing process, like heating, radiation, UV-radiation etc., the scrim and the end faces are adhesively bonded together. To keep the amount of binding agent at a minimum, the binding agent should be applied on the side of the scrim facing the end faces only. The binding agents may be applied by a roller, a doctor blade, by spraying, by brushing etc. The bonding processes between scrim and end faces can be supported by applying pressure by pressure plates, pressure belts or a pressure rolls. The pressure devices mentioned can be heated. The activation and curing processes can be conducted by such heated rolls, belts or plates. By applying pressure and heat or radiation simultaneously a preferred substance to substance-bond may take place.

The layer of scrim is preferably provided continuously by a roll, reel or coil.

Pressing and heating is preferably performed by a heatable roll.

To decrease porosity and increase bond strength of the end grain balsa panels, it is possible to apply a resin. An impregnation or coating is possible particularly on one or both end grain surfaces.

Among the significant advantages of both preferred processes of the invention are the following:
1. Uniformed material that enters the process is the key for a high automation, including a high processing speed and therewith a high volume.
2. Because there are less process steps and the possibilities of automated systems, the worker productivity (production volume/number of workers) increases.
3. The whole production process becomes leaner.
4. As there is no glueing required, the use of auxiliary materials decreases.
5. Afterwards a reorganizing of the saw milling and drying gives an opportunity to increase the yield.

For a better understanding of the invention as well as other objects and further features thereof, reference is made to the following detailed description to be read in conjunction with the accompanying drawings, wherein:
Fig. 1 is a perspective view of a lumber stick and cut end sections;
Fig. 2 shows a side view of an apparatus for a first production method;
Fig. 3 is a front view of a band saw for cutting blocks;
Fig. 4 is a side view of an apparatus for a second production method;
Fig. 5 is a side view of a panel with endless roll configuration;
Fig. 6 is cross section of a panel end with tapered side;
Fig. 7a is cross section of a panel with V-shaped side of the pieces;
Fig. 7b shows the panel of Fig. 7a placed in a curved mold.

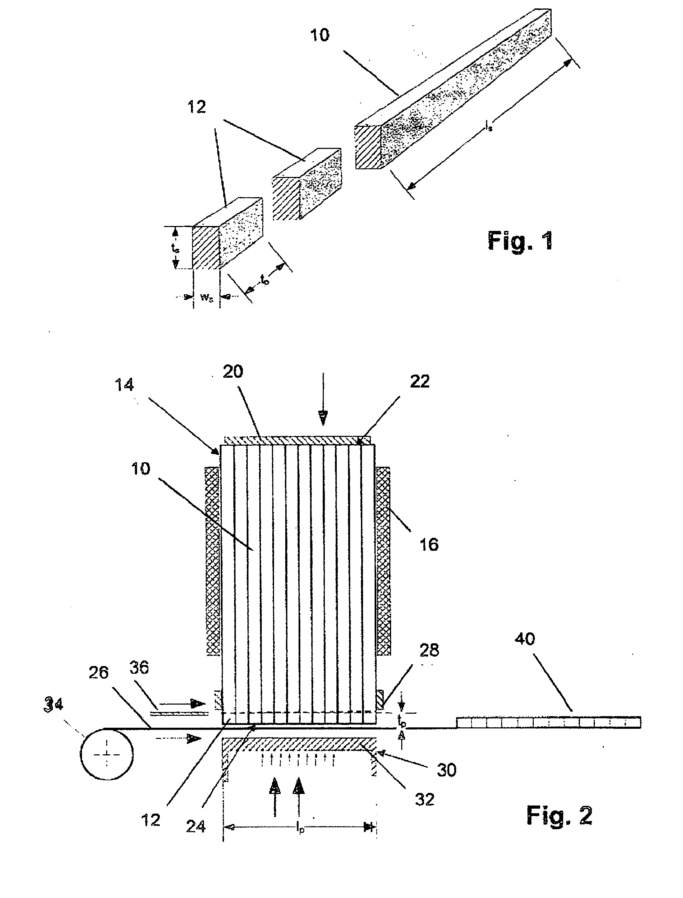

Referring now to Fig. 1, there is shown a longitudinal strip or lumber stick 10 having a preferred uniformed length Iₛ of between 1.5 and 3.5 m and a preferred rectangular cross section of 25,4 mm x 50,8 mm (1 inch x 2 inch) defined by a width wₛ and a thickness tₛ of the lumber stick 10.

Also shown in Fig. 1 are end sections 12 which have been cut from a lumber stick 10 and having a thickness tp corresponding to the thickness of an end grain balsa panel as described below.

The lumber sticks 10 are manufactured from raw pieces which are cut with oversize from round logs of balsa wood. The logs typically have a diameter of between 4 and 20 inches, depending on the age of the tree from which the log is cut.

The raw pieces are then kiln dried in a conventional oven of the type used for lumber drying to reduce the moisture content thereof to 12 percent or less, this being standard practice in the lumber industry. The kiln-dried pieces are then milled to the preferred length and the sides planed.

In a next step, defects in the lumber sticks 10 such as the piths or knots are detected and eliminated automatically by cutting off the defect parts for instance in a Dimter OptiCut system. The lumber sticks are selected along their density. Depending on the final use of end grain balsa panels, preferred are selections having a density of 80 kg/m³ and 170 kg/m³, densities of 96 kg/m³ and 153 kg/m³ are preferred.

In a further step, at least two of the defect-free lumber sticks 10, which are considerably shorter, are assembled to form lumber sticks 10 having a uniform length of for instance 1.5 to 3.5 m. The assembling of the shorter lumber sticks 10 can be performed with a finger jointing process, for instance in a Grecon finger jointing line. After cleaning the surface of the finger jointed sections, the uniformed lumber sticks can be used in process I and process II as described below.

### Process I

A plurality of uniformed lumber sticks 10 having all the same length Iₛ, width wₛ and thickness tₛ are arranged parallel to each other thereby forming a block 14 of rectangular cross section. As shown in Fig. 2 the lumber sticks 10 are arranged in a vertical position within a first pressing device 16. The dimensions of device 16 are selected to hold together the lumber sticks 10 with a pressure capable to eliminate natural torn, bends and twists as appearing in the lumber sticks. A vertically movable top plate 20 is positioned horizontally above the frame and is resting on the top of the block 14 formed by upper end faces 22 of the lumber sticks 10 and is vertically movable within the device 16.

Beneath device 16 a second pressing system 28 is arranged horizontally around the block 14, and the assembly of lumber sticks 10 in the block 14 is subjected to compression in orthogonal directions by pressing system 28, applying pressure to remove remaining voids, gaps, seams or slits between opposite contacting surfaces of the single lumber sticks. This condition is maintained until such time when the cutting off of end sections 12 of the lumber sticks 10 at the lower end of the block 14 is terminated, as explained further below. The length of the end sections 12 cut from the lumber sticks 10 corresponds to the thickness tp of a panel to be formed by end sections 12.

Lower end faces 24 of the lumber sticks 10 in the block 14 form a rectangular plane corresponding to one of the rectangular top sections of a panel to be formed by sections 12, as described below. A layer 26 of scrim comprising a binding agent, like a hot melt scrim, is unwound from a coil 34. The unwound layer 26 of scrim is positioned within a short distance beneath and parallel to the lower end faces 24 of the lumber sticks 10 of the block 14. The layer 26 of scrim is positioned between the lower end faces 24 of the lumber sticks 10 of the block 14 and a heatable and vertically movable plunger plate 30 with a top section 32 positioned parallel to the lower end faces 24 of the lumber sticks 10. The layer 26 of hot melt scrim is provided by a roll or coil 4.

A cutting device 36, such as for instance a band saw or a circular saw, is positioned directly beneath the pressing system for cutting off the end sections 12 from the lumber sticks 10 in a horizontal plane.

The process steps of a production cycle of the process I will be explained below with reference to Fig. 2.

Step 1: The pressing system 28, arranged around block 14 at its lower end beneath pressing device 16, and pressing device 16 at the top end of block 14 are unloaded. As a result the lumber sticks 10 forming block 14 drop with their lower end faces 24 on the layer 26 of a scrim, for example a scrim comprising a binding agent, as an example, a scrim coated with a hot melt. In another example of an embodiment, not shown, the scrim is arranged above the block. To bring block and scrim in mutual contact, block 14 moves upward. During the upward motion pressing device 16 and pressing system 28 remain loaded. After contact and bond of end face and scrim, the pressure of pressing device 16 and pressing system 28 is unloaded only. For a next cycle, pressing systems 28 and pressing device 16 are loaded again, using a lower pressure with device 16, and a higher pressure in pressing system 28. To produce a gap free panel, it is necessary to apply the pressure close to sawing plane, as wood is a natural material and the sticks production has tolerances, and as a consequence, the sticks are not 100% straight. The pressure applied on the block 14 in orthogonal directions is preferably about 1 kg/cm². The plunger plate 30 is moved vertically upward to contact with the layer 26 of scrim which is pressed against the lower end faces 24 of the lumber sticks 10 forming the block 14. The top plate 20 is pressed vertically against the upper end faces 22 of the lumber sticks 10 forming the block 14, thereby applying a counter pressure from the lower end faces 24 of the lumber sticks 10 to the plunger plate 30.

Step 2: During the time the plunger plate 30 is pressed against the lower end faces 24 of the lumber sticks 10 in the block 14, the plunger plate 30 is heated and heat enters the layer 26 of scrim. Under the applied pressure condition the layer 26 of the scrim is bonded to the lumber sticks 10 in the block 14 at their lower end faces 24.

Step 3: After a defined time, when the layer 26 of the scrim is fixed to the to the lumber sticks 10 at their lower end faces 24, the pressure of the plunger plate 30 against the lower ends 24 of the lumber sticks 10 in the block 14 is released to allow the cutting device 36 to cut the end sections 12 of the lumber sticks 10 from the lower end of the block 14.

Step 4: The cutting device 36, preferably a special band saw for cutting balsa wood, cuts a panel 40 from the lower end of the glue-less block 14 with a slow velocity of 5-30 inch per minute for a good surface finish.

Step 5: The plunger plate 30 moves down and the panel 40 with the thickness tp corresponding to the length of the end sections 12 forming the panel 40 is moved in a direction x, in Fig. 2 to the right. After one panel length lₚ the layer 26 of the scrim is cut. The result is a flexible panel 40, held by the layer 26 of the scrim. When the panel 40 is moved to the right in the direction x, the pressure system 28 and device 16 are unloaded, the lumber sticks 14 remaining in the block 14 drop on the fresh layer 26 of the scrim and a new cycle of process I starts again.

Above it has been disclosed, to cut the end grain balsa panel from the lower end of the block, whereby said block is standing vertical. In an advantageous embodiment, the end sections of the lumber sticks or the end grain balsa panels are cut from the top end of the vertically arranged block. Accordingly the layout of the process needs some adjustments, like moving the block in a vertical movement upwards in direction to the scrim, said scrim arranged above the block, and a plunger plate moving downwardly. In a further alternative embodiment, the block is lying in a horizontal position and the end sections of the lumber sticks are cut from one end of the block. Executing the process having a horizontal lying and moving block, a vertically arranged and moving scrim and a horizontal moving vertical plunger plate applies.

As an example of a preferred embodiment, according to method called "Process I", carriers or mounts, like pallets, are moving in a carrousel or loop manner. The carrousel may be turntable like or may be a loop or an endless conveyer having various stations for single process steps. To said carrousel, for example self driven or driven by belt or chain, carriers or mounts, for example in form of pallets, are fed, loaded, the load treated and the pallets unloaded. End grain balsa panels can be produced arranging a plurality of lumber sticks of rectangular cross-section having all the same length, width and thickness parallel to each other to be packed to a block. The lumber sticks are fixed by pressure only. Neither a temporary nor a permanent adhesive is a used packing the sticks to the block. Fixation is accomplished by for example two pressure devices, first device applying different pressure along the sides of the block, namely applying high pressure towards the one end of the block, the end the panels to be cut-off, and second device applying less pressure, mainly working as a holding device, towards the other end of the block. The pressure devices are adjustable along the block according to the progress cutting-off panels from the block. The pressure devices can be located within the carrier or fix based at a station. At least a minimum pressure on the block is maintained during the whole cycle. During scrim application and during cutting the end grain balsa panel from the block applying increased pressure is advantageous. At a first station an empty pallet is charged with the block. The lumber sticks are arranged in vertical direction. The block is compressed by the two pressure devices. Lateral high pressure is applied towards the top end of the block, less lateral pressure is applied at the lower part of the block. The charged pallet is conveyed in the loop and moves to the next station, where the scrim is applied on the top end of the block. The scrim comprising a binding agent is unwound from a coil in moving direction of the pallet and is continuously covering the top face of the block. Alternatively applying a scrim in form of single sheets can be considered. As far as necessary, preferably by applying pressure, a first intermediate bond between scrim and face of the block is provided. The pallet, loaded with the block having the scrim applied on its top end, travels in the loop to the next station, where the final permanent bond by the binding agent between top end of the block and scrim is accomplished, for example by pressing by a press or a roll and/or drying or curing, for example by way of radiation curing, like UV curing, or heat curing in an oven. After such process step, the pallet carrying the block moves forward in the loop to a next station where from the top end of the block an end grain balsa panel is cut-off by a cutting device. Depending on the wanted thickness for the end grain balsa panel, the cutting device is adjusted. The cut can be done by a saw, preferred by a band saw. Block and end grain balsa panel are cleaned and saw dust is removed. The end grain balsa panel cut from the block is removed, for example by a vacuum handling unit, by picking-up the end grain balsa panel. The end grain balsa panel can be stored for further handling on a side track or storage place. The pallet carrying the block, shortened by the end grain balsa panel is ready to travel again through the loop. Depending on the size of the carrousel, the number of pallets in the loop can vary. Once, by continuous cut-off of an end grain balsa panels in each cycle, the height of the block is reduced to a minimum, for example to 0.2 to 0.5 m, the pallet can loaded with a new block. A remainder of the foregoing block can be reused in the as called finger joint process, putting together the lumber sticks to blocks. Also, to adjust to the output wanted, empty pallets can enter a side track to be stored outside of the loop and fed into the loop again, once needed. Also, pallets can be loaded with the panels on a side track and stored at the side track. The loaded pallets can consecutively enter the loop as needed.

### Process II

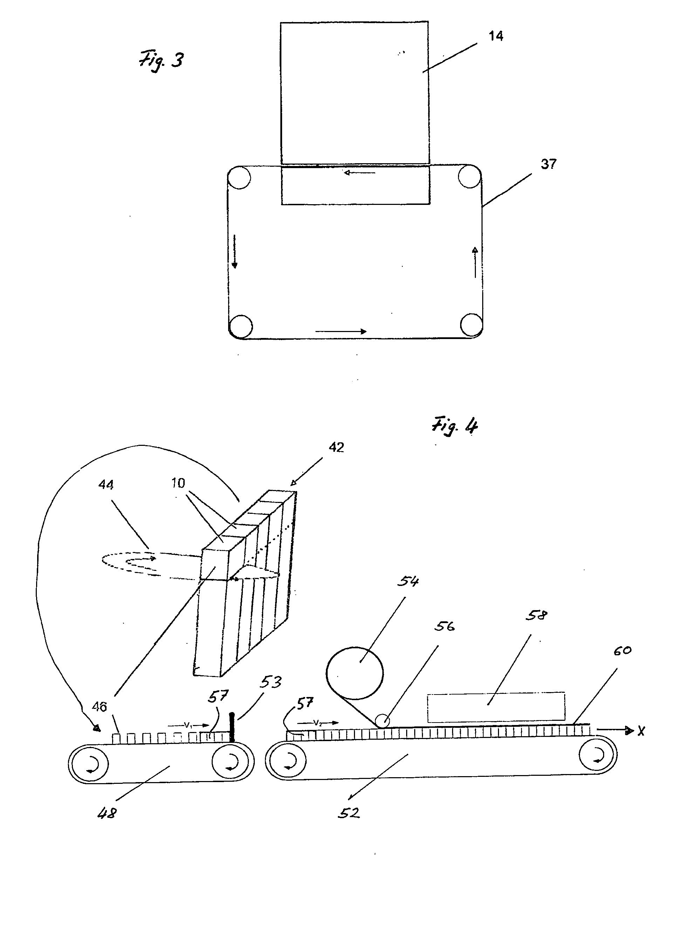

The process II will be explained below with reference to Fig. 4.

Referring now to Fig. 4, a plurality of uniformed lumber sticks 10 having all the same length lₛ, width wₛ and thickness tₛ are arranged parallel to each other in a single line 42 or, not shown, in multiple lines as a block. The lumber sticks 10 are arranged in a vertical position within a frame not shown in the drawing. A cutting device in the form of a saw, like a band saw or a circular saw 44, is positioned horizontally to cut rows 46 of end sections 12 from the upper end of the line 42 of lumber sticks 10. The cut rows 46 of end sections 12 are moved from the single line 42 and positioned perpendicular to a transfer direction x of a first horizontally arranged band-conveyor 48. Band-conveyer 48 is moving with a first feed rate v₁ in the transfer direction x. If provided, means 53 compacting or pressing the lined up rows 46 in transfer direction x or in transfer direction x and laterally, are arranged toward the end of band-conveyor 48. The compacted cut rows 46 are transferred to a second band-conveyor 52 moving with a second feed rate v₂ in the transfer direction x. Second band-conveyor 52 is arranged downstream of the first band-conveyer 48. If provided, at the upstream end of second band-conveyor 52 additional means (not shown) are located, maintaining or increasing the pressure in transfer direction x or in transfer direction x and laterally at the lined up rows. Preferably the amount of pressure applied is such to remove remaining voids, gaps, seams or slits between opposite contacting surfaces of the single end sections 12. Usually the pressure is maintained until the scrim is applied and the binding agent cured.

A roll 54 of scrim 26 containing a binding agent is positioned above band-conveyor 52.

The circular saw 44 cuts a row 46 of end sections 12 from the lower end of the line 42 of lumber sticks 10, called feeding. On the first band-conveyor 48 the rows 46 of end sections 12 move in the transfer direction x. This step is repeated continuously, possibly by several feedings, the cut rows 46 of end sections 12 move in the transfer direction x and pile up at a compacting device 53. By compacting rows 46 of end sections units 57 are formed. For clarification, no adhesive between the lumber sticks is applied. The units 57 of the piled rows 46 are transferred to a second band conveyor 52. On said second conveyor 52 a layer 26 of scrim comprising a binding agent is continuously drawn from the roll 54 and placed on the surface of the units 57 of piled rows 46 of end sections 12 with the aid of a guide roller 56. Downstream of the guide roller 56 the piled up end sections 12 pass a heating and pressing or radiation curing device 58 and the layer of scrim 26 comprising a binding agent is bonded to the upper surface of the units of piled up end sections 12.

From Fig. 4 it is evident that an endless panel 60 having the width of the line 42 of lumber sticks 10 and the thickness or height of row 46 of end sections 12, respectively. As a consequence, it is possible to process the single end sections 12 individually and to vary the measures of the panel 60, especially its length and thickness.

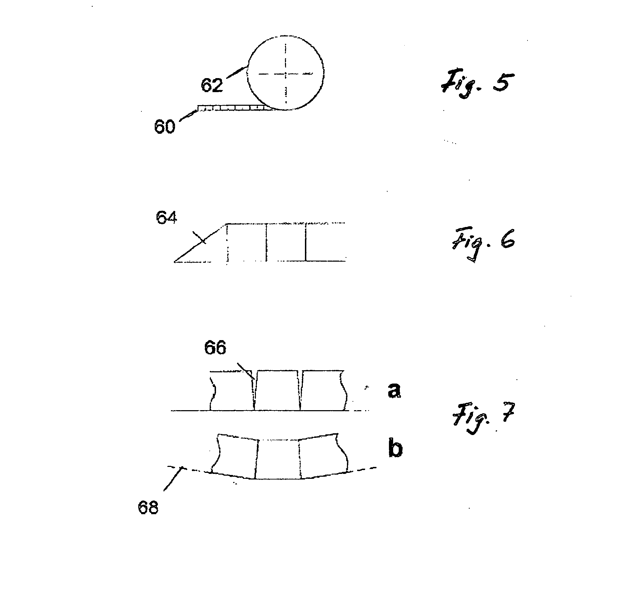

With process II it is possible to produce a "3-dimensional endless panel" with the following specification:
1. No standard size panel: the length of the panel is variable.
2. Core panel roll: Due to endless production it is possible to produce a roll 62 from the endless panel 60 (Fig. 5)
3. 3-dimensional profile: (a) thickness variations within the panel; (b) tapered sides of the pieces are already included. Fig. 6 shows a panel end with a tapered side 64.
4. V-shaped sides of the pieces to reduce the resin consumption for the customer: due to V-shaped sides of the pieces, there are no gaps when the panel is placed in a curved mold. This reduces the amount of resin for the customer. Fig. 7a shows pieces with V-shaped sides 66 when the panel is linear placed. In Fig. 7b a panel with V-shaped sides of the pieces is placed in a curved mold 68. For shaped sides at least on side wall of the end sections facing direction x has to be tapered.

With process II it is possible to design a panel that is closer to the needs of the end customer. Panels fit to the requirements of the blade manufacturer, not to the requirements of the kit manufacturer.

Flexible end grain balsa panels according to the instant invention show flexibility by bending over the scrim along edges of end faces of the lumber sticks or along rows of edges of end faces attached to the scrim. Accordingly, the shape of the sides of the end faces limit the motion of bending. The panel is bendable or flexible by bending over the scrim in the one direction. Between the opposite sides of the end faces V-shaped gaps form. In the other bending direction side faces rectangular to bottom face limit the flexibility of the panel in a plane or flat manner. V-shaped sides of the end faces allow a curvature of the panel beyond said plane manner (Fig. 7a, b).

## Claims

1. A method for producing flexible end grain balsa panels, said method comprising the steps of
A. arranging a plurality of lumber sticks having all the same length, width and thickness parallel to each other thereby forming a block of rectangular cross-section;
B. bringing in contact a layer of scrim, comprising binding agent, and the end faces of the block formed by the lumber sticks;
C. applying pressure, heat and/or radiation to the layer of scrim to laminate the scrim to the end faces of the lumber sticks.

2. A method for producing flexible end grain balsa panels according to claim 1, said method comprising the steps of
A. arranging a plurality of lumber sticks (10) of rectangular cross-section having all the same length (lₛ), width (wₛ) and thickness (tₛ) parallel to each other thereby forming a block (14) of rectangular cross-section;
B. pressing a layer of scrim (26), comprising a binding agent, against end faces (24) of the lumber sticks (10) forming the block (14);
C. maintaining pressure and applying heat and/or radiation to the layer of scrim (26) to laminate the scrim (26) to the end faces (24) of the lumber sticks (10);
D. cutting a panel (40) consisting of end sections (12) of the lumber sticks (10) laminated with the scrim (26) from the block (14).

3. A method for producing flexible end grain balsa panels according to claim 1, said method comprising the steps of
A. arranging a plurality of lumber sticks (10) of rectangular cross-section having all the same length (lₛ), width (wₛ) and thickness (tₛ) parallel to each other in a plurality of single lines (42);
B. cutting rows (46) of end sections (12) from the single lines (12) of lumber sticks (10);
C. piling up the rows (46) of end sections (12) on at least one band-conveyor (48, 52) transverse to a transfer direction (x) thereby forming an endless package of piled up rows (46) of end sections (12);
D. continuously placing a layer of scrim (26), comprising a binding agent, on end faces (24) of the piled up end sections (12);
E. pressing the layer of scrim (26) against the end faces (24) of the piled up end sections (12) forming the endless package of piled up rows (46) of end sections (12);
F. maintaining pressure and applying heat and/or radiation to the layer of binding agent scrim (26) to laminate the scrim (26) to the end faces (24) of the piled up end sections (12) thereby forming an endless panel (60);
G. cutting end grain balsa units from the endless panel (60) laminated with scrim (26).

4. The method according to any one of the preceding claims, wherein the layer of scrim (26) is provided by a roll (54).

5. The method according to claim 2, wherein the cutting device is a band saw (37).

6. The method according to claim 2, wherein pressing and heating is performed by a heatable plunger plate (30).

7. The method according to claims 1 to 6, wherein the lumber sticks (10) are held in a frame (16).

8. The method according to claim 2, wherein at least one pressing system (28) is arranged round the block (14) and the block (14) is subjected to compression in orthogonal directions by the pressing system (28).

9. The method according to claim 3, wherein pressing and heating is performed by a heatable roll (58).
